# EUROPÄISCHE PATENTSCHRIFT

(11) **EP 3 174 736 B1**
(45) Veröffentlichungstag und Bekanntmachung des Hinweises auf die Patenterteilung: **28.08.2019**
(21) Anmeldenummer: 15723729.8
(22) Anmeldetag: 27.05.2015
(51) Int. Cl.: B60C 9/20, B60C 15/00

(54) **FAHRRADREIFEN**
BICYCLE TYRE
PNEU DE BICYCLETTE

(30) Priorität: 30.07.2014 DE 102014214893
(43) Veröffentlichungstag der Anmeldung: 07.06.2017
(73) Patentinhaber: Continental Reifen Deutschland GmbH, 30165 Hannover (DE)
(72) Erfinder: WURMBÄCK, Christian, 34596 Bad Zwesten (DE)
(74) Vertreter: Widjaja, Wira
(86) Internationale Anmeldenummer: PCT/EP2015/061617
(87) Internationale Veröffentlichungsnummer: WO 2016/015897

(56) Entgegenhaltungen:
- EP-A1- 2 666 650
- WO-A1-2005/039894
- JP-A- 2014 034 283
- US-A- 4 649 979

## Beschreibung

Die Erfindung betrifft einen Fahrradreifen. Herkömmliche Fahrradreifen, insbesondere Rennradreifen, sind auf Rollwiderstand, Pannenschutz und Laufleistung ausgelegt und optimiert.

Es ist bekannt, Fahrradreifen mit einer schnittresistenten Fasereinlage zu versehen, damit der Reifen vor einer Reifenpanne geschützt wird. Das relativ steife Material der schnittresistenten Fasereinlage kann einen negativen Einfluss auf den Rollwiderstand des Fahrradreifens haben.

Die gattungsgemäße WO 2005/039894 A1, JP 2014 034283 A und US 4 694 979 A offenbaren bekannte Reifenkonstruktionen.

Der Erfindung liegt die Aufgabe zu Grunde, einen Fahrradreifen zu verbessern. Insbesondere soll der Rollwiderstand bei Rennradreifen reduziert werden.

Gelöst wird die Aufgabe gemäß dem Oberbegriff und den kennzeichnenden Merkmalen des Anspruchs 1.

Ein Vorteil des erfindungsgemäßen Reifens ist insbesondere darin zu sehen, dass durch die neue Reifenkonstruktion des Fahrradreifens der Rollwiderstand wesentlich verbessert wird, wobei gleichzeitig der Pannenschutz durch die schnittresistente Fasereinlage nicht beeinträchtigt wird. Insbesondere durch die besondere Anordnung der Festigkeitsträger in einem Winkel zwischen 80 und 110 Grad in Bezug auf die Umfangsrichtung des Fahrradreifens wird der Rollwiderstand des Fahrradreifens deutlich reduziert. Diese überraschende Wirkung der neuartigen Anordnung der Festigkeitsträger hat sich insbesondere bei Versuchen gezeigt.

In einer vorteilhaften Weiterbildung der Erfindung ist vorgesehen, dass die Festigkeitsträger der schnittresistenten Lage im Wesentlichen in einem Winkel von 85 bis 110 Grad, vorzugsweise ca. 90 Grad, in Bezug auf die Umfangsrichtung des Fahrradreifens angeordnet sind. Bei dieser Anordnung der Festigkeitsträger in der schnittresistenten Lage wird ein optimaler Wert für den Rollwiderstand erzielt.

In einer weiteren vorteilhaften Weiterbildung der Erfindung ist vorgesehen, dass die schnittresistente Faserlage in der Aufsicht ca. 2 bis 5 mm schmaler ist als der Laufstreifen. Dadurch ist die schnittresistente Faserlage nur in dem Bereich der Reifenkarkasse angeordnet, wo im Normalfall Schnitte zu erwarten sind.

In einer weiteren vorteilhaften Weiterbildung der Erfindung ist vorgesehen, dass die Festigkeitsträger der schnittresistenten Faserlage aus einem flüssig gesponnenen Polymer, insbesondere aus Polyesterpolyacrylat, bestehen. Diese Art von Festigkeitsträgern zeichnen sich durch eine besonders hohe Schnittresistenz aus.

In einer weiteren vorteilhaften Weiterbildung der Erfindung ist vorgesehen, dass der Durchmesser der Festigkeitsträger ca.0,1 - 0,3 mm beträgt. Dadurch besitzt die schnittresistente Faserlage ein relativ geringes Gewicht.

In einer weiteren vorteilhaften Weiterbildung der Erfindung ist vorgesehen, dass die schnittresistente Faserlage auf der Unter- und Oberseite eine Gummierung umfasst und eine Materialdicke von ca. 0,3 bis 0,5 mm, vorzugsweise 0,35 mm, aufweist. Dadurch besitzt der Fahrradreifen einen hohen Pannenschutz, wobei gleichzeitig das Gesamtgewicht niedrig gehalten wird.

In einer weiteren vorteilhaften Weiterbildung der Erfindung ist vorgesehen, dass die Festigkeitsträger in der schnittresistenten Faserlage in einer hohen Materialdichte angeordnet sind, wobei der Abstand der parallel verlaufenden Festigkeitsträger ca. 50 - 60 Festigkeitsträger pro Zoll beträgt. Dadurch gewährleistet die schnittresistente Faserlage einen hohen Pannenschutz.

Es ist vorgesehen, dass über der Reifenkarkasse eine dämpfende Gummieinlage aus einem hochelastischen Kautschuk angeordnet ist, wobei die dämpfende Gummieinlage Rebound 70-80 eine Materialdicke zwischen 0,2 und 2 mm aufweist, wobei die Karkasseinlagenenden maximal bis zu den seitlichen Randbereichen des Laufstreifens reichen.

Bei dieser Reifenkonstruktion ist zwischen dem Laufstreifen und der Reifenkarkasse eine dämpfende Gummieinlage aus einem hochelastischen Kautschuk angeordnet. Durch die spezielle Materialdicke der dämpfenden Gummieinlage wird der Fahrkomfort des Fahrradreifens wesentlich verbessert, da sich der Fahrradreifen insgesamt besser dem Fahrbahnuntergrund anpassen kann. Außerdem reichen die Karkasseinlagenenden maximal bis zu den seitlichen Randbereichen des Laufstreifens. Auf diese Weise weist die Reifenkarkasse unterhalb des Laufstreifens eine hohe Elastizität auf, wodurch ebenfalls der Fahrkomfort wesentlich verbessert wird. Insbesondere bei Rennradreifen führt die neue Reifenkonstruktion zu einer erheblichen Verbesserung des Fahrkomforts.

In einer weiteren vorteilhaften Weiterbildung der Erfindung ist vorgesehen, dass die Reifenkarkasse zwei übereinander liegende Karkasseinlagen aufweist, wobei durch die Karkasskonstruktion die Seitenwände versteift und der Rollwiderstand reduziert wird. Die zwei übereinanderliegenden Karkasseinlagen führen zu einer Vereinfachung des Herstellungsprozesses für Fahrradreifen. Außerdem kann durch diese Seitenwandkonstruktion der Rollwiderstand des Fahrradreifens reduziert werden.

In einer weiteren vorteilhaften Weiterbildung der Erfindung ist vorgesehen, dass die zwei übereinander liegenden Karkasseinlagen die gesamte Seitenwand abdecken und die Karkasseinlagenenden kurz unterhalb der seitlichen Randbereiche des Laufstreifens enden. Auf diese Weise wird ein optimaler Schutz für die Seitenwand gewährleistet.

In einer weiteren vorteilhaften Weiterbildung der Erfindung ist vorgesehen, dass die dämpfende Gummieinlage eine Materialdicke zwischen 0,3 und 1 mm aufweist. Bei dieser Materialdicke wird ein optimaler Fahrkomfort erzielt, wobei gleichzeitig der Rollwiderstand des Fahrradreifens nicht erhöht wird.

In einer weiteren vorteilhaften Weiterbildung der Erfindung ist vorgesehen, dass die dämpfende Gummieinlage aus einem hochelastischen Kautschuk mit einem Rebound-Materialwert zwischen 70 und 80 besteht.
Bei diesem Rebound-Materialwert wird ein optimaler Fahrkomfort erzielt, wobei gleichzeitig der Rollwiderstand des Fahrradreifens nicht erhöht wird.

In einer weiteren vorteilhaften Weiterbildung der Erfindung ist vorgesehen, dass der Fahrradreifen ein Rennradreifen ist und mit einem Mindestreifendruck von ca. 5,5 Bar betrieben wird. Die neue Reifenkonstruktion lässt sich bei Rennradreifen besonders vorteilhaft einsetzen, da der Fahrkomfort wesentlich gesteigert wird.

Anhand eines Ausführungsbeispieles soll die Erfindung näher erläutert werden. Es zeigen:
- Fig. 1:: die schnittresistente Faserlager in der Aufsicht,
- Fig. 2:: den Fahrradreifen im Querschnitt.

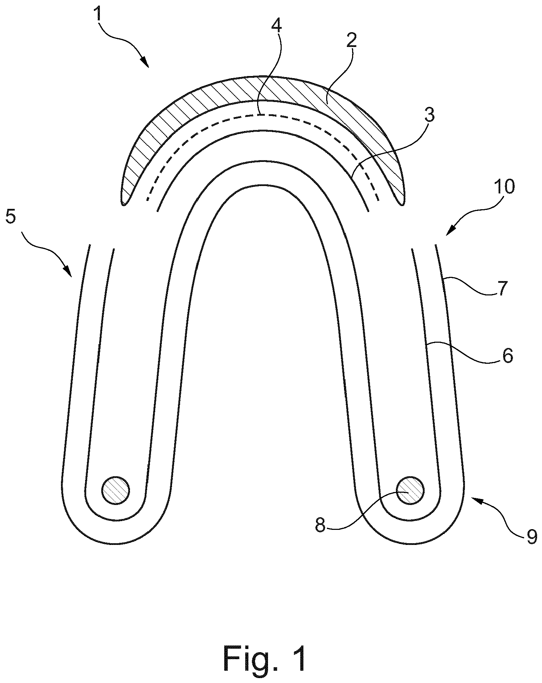

Die Fig. 1 zeigt die schnittresistente Faserlage 4 in der Aufsicht. Die einzelnen Festigkeitsträger 12 der Faserlage 4 sind im Wesentlichen in einem Winkel von ca. 90 Grad zur Umfangsrichtung 13 des Fahrradreifens angeordnet. Die Bauteile des Fahrradreifens sind schematisch in der Aufsicht dargestellt, wobei die Position 5 die Lage der Seitenwand und die Position 11 die Lage des Reifenkernes anzeigt. Als schnittresistente Faserlage kann beispielsweise ein Gewebe eingesetzt werden, welches unter dem Markennamen Vectran (aus Polyesterpolyacrylat) bekannt ist.

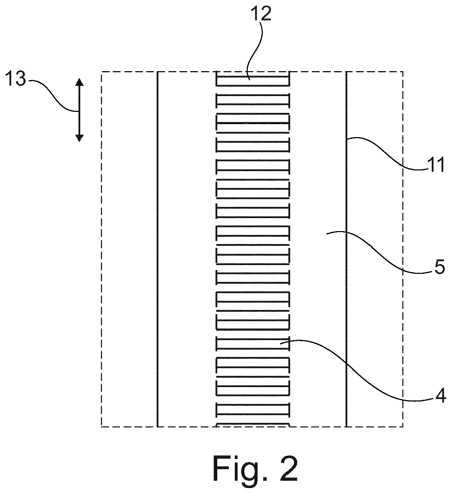

Die Fig. 2 zeigt die wesentlichen Reifenbauteile des Fahrradreifens in einer Querschnittansicht. Der dargestellte Rennradreifen weist zwei übereinanderliegende Karkasseinlagen 6 und 7 auf. Die Karkasseinlagenenden 10 sind auf beiden Seiten um den Kern 8 herumgeschlagen und reichen bis kurz unterhalb der seitlichen Bereiche des Laufstreifens 2. Die Karkasseinlagenenden 10 decken im Wesentlichen die Seitenwand des Rennradreifens vollständig ab. Im Bereich der Seitenwand sind somit 4 Lagen Karkassgewebe übereinander angeordnet, wodurch die Seitenwand insgesamt eine hohe Steifigkeit aufweist. Unterhalb des Laufstreifens 2 ist die dämpfende Gummieinlage 3 angeordnet, die vorzugsweise eine Materialdicke zwischen 0,3 und 1 mm aufweist. Die Gummieinlage 3 deckt die Unterseite des Laufstreifens 2 im Wesentlichen vollständig ab. Außerdem ist unterhalb des Laufstreifens 2 die schnittresistente Faserlage 4 angeordnet, die in der Figur als gestrichelte Linie dargestellt ist. Die schnittresistente Faserlage gewährleistet einen optimalen Pannenschutz und Rollwiderstand. Bei der neuen Reifenkonstruktion reichen die Karkasseinlagenenden 10 nicht bis unterhalb des Laufstreifens, wodurch der Fahrkomfort des Rennradreifens wesentlich verbessert wird. Die dämpfende Gummieinlage 3 trägt ebenfalls zur Steigerung des Fahrkomforts bei.

### Bezugszeichenliste

- 1: Fahrradreifen
- 2: Laufstreifen
- 3: Dämpfende Gummieinlage
- 4: schnittresistente Faserlage (gestrichelte Linie)
- 5: Seitenwand
- 6: Erste Karkasseinlage
- 7: Zweite Karkasseinlage
- 8: Kern
- 9: Nesselband
- 10: Karkasseinlagenenden
- 11: Position der Kernes
- 12: einzelner Festigkeitsträger (Winkelausrichtung: ca: 90 Grad)
- 13: Umfangsrichtung des Fahrradreifens

## Patentansprüche

1. Fahrradreifen (1) mit einem Laufstreifen (2), einer Reifenkarkasse. Reifenseitenwänden (5) und einem Reifenwulst mit einem Kern (8),
wobei die Reifenkarkasse mindestens eine Karkasseinlage umfasst,
wobei das Karkasseinlagenende (10) um den Kern (8) herumgeschlagen ist und in der Seitenwand (5) endet,
wobei unterhalb des Laufstreifens eine schnittresistente Faserlage (4) angeordnet ist, wobei zwischen dem Laufstreifen (2) und der Reifenkarkasse eine schnittresistente Faserlage (4) mit einer Vielzahl von parallel verlaufenden Festigkeitsträgern (12) aus einem Polymer angeordnet ist,
**dadurch gekennzeichnet, dass**
die Festigkeitsträger (12) in einem Winkel zwischen ca. 80 und 110 Grad in Bezug auf die Umfangsrichtung (13) des Fahrradreifens angeordnet sind,
wobei über der Reifenkarkasse eine dämpfende Gummieinlage (3) aus einem hochelastischen Kautschuk angeordnet ist,
wobei die dämpfende Gummieinlage (3) eine Materialdicke zwischen 0,2 und 2 mm aufweist,
wobei die Karkasseinlagenenden (10) maximal bis zu den seitlichen Randbereichen des Laufstreifens (2) reichen.

2. Fahrradreifen nach Anspruch 1,
**dadurch gekennzeichnet, dass**
die Festigkeitsträger (12) der schnittresistenten Faserlage (4) im Wesentlichen in einem Winkel von 85 bis 90 Grad, vorzugsweise ca. 90 Grad, in Bezug auf die Umfangsrichtung (13) des Fahrradreifens angeordnet sind.

3. Fahrradreifen nach einem der vorhergehenden Ansprüche,
**dadurch gekennzeichnet, dass**
die schnittresistente Faserlage (4) in der Aufsicht ca. 2 bis 5 mm schmaler ist als der Laufstreifen (2).

4. Fahrradreifen nach einem der vorhergehenden Ansprüche,
**dadurch gekennzeichnet, dass**
die Festigkeitsträger (12) der schnittresistenten Faserlage (4) aus einem flüssig gesponnenen Polymer bestehen.

5. Fahrradreifen nach einem der vorhergehenden Ansprüche,
**dadurch gekennzeichnet, dass**
der Durchmesser der Festigkeitsträger (12) ca. 01, bis 0,3 mm beträgt.

6. Fahrradreifen nach einem der vorhergehenden Ansprüche,
**dadurch gekennzeichnet, dass**
die schnittresistente Faserlage (4) auf der Unter- und Oberseite eine Gummierung umfasst und eine Materialdicke von ca. 0,3 bis 0,5 mm, vorzugsweise 0,35 mm, aufweist.

7. Fahrradreifen nach einem der vorhergehenden Ansprüche,
**dadurch gekennzeichnet, dass**
die Festigkeitsträger (12) in der schnittresistenten Faserlage (4) in einer hohen Materialdichte angeordnet sind,
wobei der Abstand der parallel verlaufenden Festigkeitsträger (12) ca. 50 - 60 Festigkeitsträger pro Zoll beträgt.

8. Fahrradreifen nach einem der vorhergehenden Ansprüche,
**dadurch gekennzeichnet, dass**
die Reifenkarkasse zwei übereinander liegende Karkasseinlagen (6, 7) aufweist, wobei durch die Karkasskonstruktion die Seitenwände (5) versteift und der Rollwiderstand reduziert wird.

9. Fahrradreifen nach einem der vorhergehenden Ansprüche,
**dadurch gekennzeichnet, dass**
die dämpfende Gummieinlage (3) eine Materialdicke zwischen 0,3 und 1 mm aufweist.

10. Fahrradreifen nach einem der vorhergehenden Ansprüche,
**dadurch gekennzeichnet, dass**
der Fahrradreifen (1) ein Rennradreifen ist und mit einem Mindestreifendruck von ca. 5,5 Bar betrieben wird.

## Claims

1. Bicycle tyre (1) having a running strip (2), a tyre carcass, tyre side walls (5), and a tyre bead having a core (8),
wherein the tyre carcass comprises at least one carcass inlay,
wherein the carcass inlay end (10) is folded back over the core (8) and terminates in the side wall (5),
wherein a cut-resistant fibrous layer (4) is disposed below the running strip,
wherein
a cut-resistant fibrous layer (4) having a multiplicity of strength members (12), running in parallel, from a polymer are disposed between the running strip (2) and the tyre carcass,
**characterized in that**
the strength members (12) are disposed at an angle between approx. 80 and 110 degrees in relation to the circumferential direction (13) of the bicycle tyre,
wherein a damping rubber inlay (3) from a highly elastic rubber is disposed above the tyre carcass, wherein the damping rubber inlay (3) has a material thickness between 0.2
and 2 mm,
wherein the carcass inlay ends (10) at maximum reach up to the lateral peripheral regions of the running strip (2).

2. Bicycle tyre according to Claim 1,
**characterized in that**
the strength members (12) of the cut-resistant fibrous layer (4) in relation to the circumferential direction (13) of the bicycle tyre are disposed substantially at an angle from 85 to 90 degrees, preferably approx. 90 degrees.

3. Bicycle tyre according to one of the preceding patent claims,
**characterized in that**
the cut-resistant fibrous layer (4) in the plan view is approx. 2 to 5 mm narrower than the running strip (2) .

4. Bicycle tyre according to one of the preceding patent claims,
**characterized in that**
the strength members (12) of the cut-resistant fibrous layer (4) are composed of a liquid-spun polymer.

5. Bicycle tyre according to one of the preceding patent claims,
**characterized in that**
the diameter of the strength members (12) is approx. 01. to 0.3 mm.

6. Bicycle tyre according to one of the preceding patent claims,
**characterized in that**
the cut-resistant fibrous layer (4) on the upper and the lower side comprises a rubber coating, and has a material thickness of approx. 0.3 to 0.5 mm, preferably of 0.35 mm.

7. Bicycle tyre according to one of the preceding patent claims,
**characterized in that**
the strength members (12) in the cut-resistant fibrous layer (4) are disposed at a high material density,
wherein the spacing of the strength members (12) running in parallel is approx. 50 to 60 strength members per inch.

8. Bicycle tyre according to one of the preceding patent claims,
**characterized in that**
the tyre carcass has two carcass inlays (6, 7), lying on top of one another, wherein the side walls (5) are reinforced and the rolling resistance is reduced by way of the carcass construction.

9. Bicycle tyre according to one of the preceding patent claims,
**characterized in that**
the damping rubber inlay (3) has a material thickness between 0.3 and 1 mm.

10. Bicycle tyre according to one of the preceding patent claims,
**characterized in that**
the bicycle tyre (1) is a racing bicycle tyre and is operated at a minimum tyre pressure of approx. 5.5 bar.

## Revendications

1. Pneumatique de bicyclette (1) comprenant une bande de roulement (2), une carcasse de pneumatique, des parois latérales de pneumatique (5) et un talon de pneumatique pourvu d'un noyau (8),
la carcasse de pneumatique comprenant au moins une armature de carcasse,
l'extrémité (10) de l'armature de carcasse étant enroulée autour du noyau (8) et se terminant dans la paroi latérale (5),
une couche de fibres (4) résistant aux coupures étant disposée au-dessous de la bande de roulement,
une couche de fibres (4), résistant aux coupures, qui est pourvue d'une pluralité d'éléments de renforcement s'étendant parallèlement (12) en polymère étant disposée entre la bande de roulement (2) et la carcasse de pneumatique,
**caractérisé en ce que**
les éléments de renforcement (12) sont disposés selon un angle compris entre environ 80 et 110 degrés par rapport à la direction circonférentielle (13) du pneumatique de bicyclette,
une armature d'amortissement (3) en caoutchouc très élastique étant disposée sur la carcasse de pneumatique,
l'armature d'amortissement en caoutchouc (3) ayant une épaisseur de matière comprise entre 0,2 et 2 mm,
les extrémités d'armature de carcasse (10) atteignant au maximum les zones de bord latérales de la bande de roulement (2).

2. Pneumatique de bicyclette selon la revendication 1,
**caractérisé en ce que**
les éléments de renforcement (12) de la couche de fibres (4) résistant aux coupures sont disposés sensiblement selon un angle compris entre 85 et 90 degrés, de préférence d'environ 90 degrés, par rapport à la direction circonférentielle (13) du pneumatique de bicyclette.

3. Pneumatique de bicyclette selon l'une des revendications précédentes,
**caractérisé en ce que**
la couche de fibres (4) résistant aux coupures est plus étroite d'environ 2 à 5 mm, en vue en plan, que la bande de roulement (2).

4. Pneumatique de bicyclette selon l'une des revendications précédentes,
**caractérisé en ce que**
les éléments de renforcement (12) de la couche de fibres (4) résistant aux coupures sont en un polymère filé à l'état liquide.

5. Pneumatique de bicyclette selon l'une des revendications précédentes,
**caractérisé en ce que**
le diamètre des éléments de renforcement (12) est d'environ 01, à 0,3 mm.

6. Pneumatique de bicyclette selon l'une des revendications précédentes,
**caractérisé en ce que**
la couche de fibres (4) résistant aux coupures comporte du côté inférieur et du côté supérieur un revêtement en caoutchouc et a une épaisseur de matière d'environ 0,3 à 0,5 mm, de préférence de 0,35 mm.

7. Pneumatique de bicyclette selon l'une des revendications précédentes,
**caractérisé en ce que**
les éléments de renforcement (12) sont disposés dans la couche de fibres (4) résistant aux coupures avec une densité de matière élevée,
la distance entre les éléments de renforcement s'étendant parallèlement (12) étant d'environ 50 à 60 éléments de renforcement par pouce.

8. Pneumatique de bicyclette selon l'une des revendications précédentes,
**caractérisé en ce que**
la carcasse de pneumatique comporte deux armatures de carcasse superposées (6, 7), les parois latérales (5) étant rigidifiées, et la résistance au roulement diminuée, par la structure de carcasse.

9. Pneumatique de bicyclette selon l'une des revendications précédentes,
**caractérisé en ce que**
l'armature d'amortissement en caoutchouc (3) a une épaisseur de matière comprise entre 0,3 et 1 mm.

10. Pneumatique de bicyclette selon l'une des revendications précédentes,
**caractérisé en ce que**
le pneumatique de bicyclette (1) est un pneumatique de vélo de course et est utilisé à une pression de pneumatique minimale d'environ 5,5 bars.
